(19) **Europäisches Patentamt**
**European Patent Office**
**Office européen des brevets**

(11) **EP 4 572 199 A1**

(12) **EUROPEAN PATENT APPLICATION**
published in accordance with Art. 153(4) EPC

(43) Date of publication:
**18.06.2025 Bulletin 2025/25**

(21) Application number: **23860952.3**

(22) Date of filing: **01.09.2023**

(51) International Patent Classification (IPC):
*H04L 1/18* $^{(2023.01)}$ *H04L 67/12* $^{(2022.01)}$
*H04W 4/70* $^{(2018.01)}$ *G16Y 10/75* $^{(2020.01)}$
*G16Y 20/20* $^{(2020.01)}$

(52) Cooperative Patent Classification (CPC):
**G16Y 10/75; G16Y 20/20; H04L 1/18; H04L 67/12;
H04W 4/70;** Y02D 30/70

(86) International application number:
**PCT/KR2023/013104**

(87) International publication number:
**WO 2024/049277 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022 KR 20220111718**

(71) Applicant: **LG Energy Solution, Ltd.
Seoul 07335 (KR)**

(72) Inventor: **CHUNG, Moon Koo
Daejeon 34122 (KR)**

(74) Representative: **Hoffmann Eitle
Patent- und Rechtsanwälte PartmbB
Arabellastraße 30
81925 München (DE)**

(54) **IOT DEVICE FOR RETRANSMITTING DATA AND OPERATING METHOD THEREOF**

(57) Disclosed is an IoT device, including: a sensing circuit that obtains state values of a battery cell every time intervals; a communication circuit that establishes a wireless communication connection with a server at a transmission timing of data including the state values obtained during a designated time period; and a processor. The processor of the IoT device may be configured to: transmit the data of the state values obtained during the designated time period to the server through the communication circuit; in response to failure in transmission of the data, divide the data into sub-data of a division number based on the number of retransmissions of the data; and sequentially retransmit the sub-data through the communication circuit at a transmission time interval based on the number of retransmissions. The transmission time interval may be a time interval obtained by dividing the designated time period by the number of retransmissions.

FIG.1

**Description**

## TECHNICAL FIELD

CROSS-REFERENCE TO RELATED APPLICATIONS

This application claims the benefit of Korean Patent Application No. 10-2022-0111718, filed on September 2, 2022 in the Korean Intellectual Property Office, the disclosure of which is incorporated herein in its entirety by reference.

TECHNICAL FIELD

Embodiments disclosed in the present disclosure relate to an internet of things (IoT) device that retransmits data and a method of operating the same.

## BACKGROUND ART

What internet of things (IoT) means is that all objects (e.g., electronic devices and the like), such as TVs, smartphones, PCs, cars, refrigerators, washing machines, dryers, air conditioners, heaters, and watches, are connected to a wireless network. Using IoT, a plurality of electronic devices may exchange data wirelessly.

In order to implement an IoT environment, a plurality of electronic devices must maintain communication connections with each other. A wireless communication network may be used to interconnect a plurality of electronic devices. A representative example of such a wireless communication network is a wireless local area network (WLAN). Wi-Fi is a technology for implementing WLAN.

In order for a plurality of electronic devices to build an IoT network, each of the plurality of electronic devices may be connected to and registered with a server through an access point (AP). Here, the AP may be a device capable of wirelessly transmitting and receiving data with each of a plurality of electronic devices, and transmitting and receiving data with a core network in a wired manner and/or wirelessly.

## DISCLOSURE OF THE INVENTION

## TECHNICAL PROBLEM

IoT networks are utilizable in various fields. For example, IoT networks are utilizable in factories.

An IoT device in a factory may occupy resources in an IoT network to transmit data to a server. If data transmission of the IoT device fails, a time during which the IoT device occupies the resources of the IoT network may increase.

Accordingly, if excessive network traffic occurs in an environment such as a factory, or if a time during which a specific IoT device occupies IoT network resources increases, an IoT network may be temporarily paralyzed.

The technical problems of the embodiments disclosed in the present disclosure are not limited to the technical problems mentioned above, and other technical problems not mentioned can be clearly understood by those skilled in the art from the description below.

## TECHNICAL SOLUTION

An IoT device according to an embodiment disclosed in the present disclosure may include: a sensing circuit that obtains state values of a battery cell every time intervals; a communication circuit that establishes a wireless communication connection with a server at a transmission timing of data including the state values obtained during a designated time period; and a processor, wherein the processor is configured to: transmit the data of the state values obtained during the designated time period to the server through the communication circuit; in response to failure in transmission of the data, divide the data into sub-data of a division number based on the number of retransmissions of the data; and sequentially retransmit the sub-data through the communication circuit at a transmission time interval based on the number of retransmissions, wherein the transmission time interval is a time interval obtained by dividing the designated time period by the number of retransmissions.

In the IoT device according to an embodiment disclosed in the present disclosure, the division number may be determined based on a value obtained by dividing a total time required to transmit the data by an occupancy limit time for the network of the IoT device, the total time required for transmission may be the product of the total number of transmissions of the data and a time required to transmit the data, and the total number of transmissions may be a value obtained by adding 1 to the number of retransmissions.

In the IoT device according to an embodiment disclosed in the present disclosure, if the total time required for transmission is less than or equal to the occupancy limit time, the division number may be 1, and if the total time required for transmission exceeds the occupancy limit time, the division number may be determined based on the divided value.

In the IoT device according to an embodiment disclosed in the present disclosure, the division number may be determined by one of the up value, down value, or rounding value of the divided value.

The processor of the IoT device according to an embodiment disclosed in the present disclosure may be configured to: identify at least one piece of sub-data that failed to be retransmitted among the sub-data; if the at least one piece of sub-data that failed to be retransmitted is identified, identify a new division number of the at least one piece of sub-data on the basis of an updated number of retransmissions; divide the at least one piece of sub-data into new sub-data corresponding to the new division number; and sequentially retransmit the new sub-data through the communication circuit at an updated transmission time interval based on the updated number of retransmissions.

The processor of the IoT device according to an embodiment disclosed in the present disclosure may be configured to: determine whether retransmission timings of the sub-data overlap with a transmission timing of another piece of data of state values obtained during a time period following the designated time period; if one retransmission timing of the retransmission timings overlaps with the transmission timing of the other data, determine new retransmission timings on the basis of an offset; and based on the new retransmission timings, retransmit the sub-data sequentially through the communication circuit.

A method of operating an IoT device according to an embodiment disclosed in the present disclosure may include: obtaining state values of a battery cell every time intervals; transmitting data of the state values obtained during a designated time period to a server through a communication circuit of the IoT device; in response to failure in transmission of the data, dividing the data into sub-data of a division number based on the number of retransmissions of the data; and sequentially retransmitting the sub-data through the communication circuit at a transmission time interval based on the number of retransmissions, wherein the transmission time interval is a time interval obtained by dividing the designated time period by the number of retransmissions.

In the method of operating an IoT device according to an embodiment disclosed in the present disclosure, the division number may be determined based on a value obtained by dividing a total time required to transmit the data by an occupancy limit time for the network of the IoT device, the total time required for transmission may be the product of the total number of transmissions of the data and a time required to transmit the data, and the total number of transmissions may be a value obtained by adding 1 to the number of retransmissions.

In the method of operating an IoT device according to an embodiment disclosed in the present disclosure, if the total time required for transmission is less than or equal to the occupancy limit time, the division number may be 1, and if the total time required for transmission exceeds the occupancy limit time, the division number may be determined based on the divided value.

In the method of operating an IoT device according to an embodiment disclosed in the present disclosure, the division number may be determined by one of the up value, down value, or rounding value of the divided value.

The method of operating an IoT device according to an embodiment disclosed in the present disclosure may include: if at least one piece of sub-data among the sub-data has been transmitted, identifying remaining sub-data that failed to be transmitted among the sub-data; identifying a new division number of the remaining sub-data on the basis of the updated number of retransmissions; dividing the remaining sub-data into new sub-data corresponding to the new division number; and sequentially retransmitting the new sub-data through the communication circuit at an updated transmission time interval based on the updated number of retransmissions.

In the method of operating an IoT device according to an embodiment disclosed in the present disclosure, the retransmitting may include: determining the retransmission timings of the sub-data so that the retransmission timings do not overlap with a transmission timing of another piece of data of state values obtained during a time period following the designated time period; and based on the determined retransmission timings, sequentially retransmitting the sub-data through the communication circuit.

## ADVANTAGEOUS EFFECTS

An IoT device for retransmitting data and a method of operating the same according to various embodiments disclosed in the present disclosure may not excessively occupy IoT network resources.

The effects of the IoT device for retransmitting data and the method of operating the same according to the disclosure of the present disclosure are not limited to the effects mentioned above, and other effects not mentioned will be clearly understood by those skilled in the art according to the disclosure of the present disclosure.

## BRIEF DESCRIPTION OF THE DRAWINGS

FIG. 1 is a block diagram of a network environment according to an embodiment of the present disclosure.

FIG. 2A is a block diagram of an IoT device according to an embodiment of the present disclosure.

FIG. 2B is a block diagram of a server according to an embodiment of the present disclosure.

FIG. 3 is a flowchart showing an operation of an IoT device according to an embodiment of the present disclosure.

FIG. 4 is a flowchart showing an operation of an IoT device according to an embodiment of the present disclosure.

In relation to the description of the drawings, identical or similar reference numerals may be used for identical or similar components.

## MODE FOR CARRYING OUT THE INVENTION

Hereinafter, embodiments of the present invention will be described with reference to the accompanying drawings. However, this is not intended to limit the present invention to specific embodiments, and should be understood to include various modifications, equivalents, and/or alternatives to the embodiments of the present invention.

The embodiments of the present disclosure and the terms used herein are not intended to limit the technical features described in the present disclosure to specific embodiments, and should be understood to include various changes, equivalents, or replacements of the embodiments. With regard to the description of the drawings, similar reference numbers may be used for similar or related components. The singular form of a noun corresponding to an item may include the one item or more, unless the relevant context clearly indicates otherwise.

In the present disclosure, each of phrases such as "A or B", "at least one of A and B", "at least one of A or B", "A, B or C", "at least one of A, B and C", and "at least one of A, B, or C" may include any one of items listed together in a corresponding one of the phrases, or any possible combination thereof. Terms such as "first", "second", "A", "B", "(a)" or "(b)" may be used simply to distinguish a corresponding component from other components, and unless specifically stated to the contrary, corresponding components are not limited in any other respect (e.g., importance or order).

In the present disclosure, if any (e.g., first) component is referred to as being "connected", "coupled" or "lined" to another (e.g., second) component with or without the terms "functionally" or "communicatively", this means that the one component may be connected to the other component directly (e.g., directly (e.g., in a wired manner or wirelessly), or indirectly (e.g., through a third component).

A method according to various embodiments disclosed in the present disclosure may be provided as being included in a computer program product. A computer program product, as a commodity, may be traded between sellers and buyers. A computer program product may be distributed on a machine-readable storage medium (e.g., compact disc read only memory (CD-ROM)) or distributed online, directly through an application store or between two user devices (e.g., downloaded or uploaded). In the case of online distribution, at least some of computer program products may be at least temporarily stored or temporarily created in a machine-readable storage medium, such as the memory of a manufacturer's server, an application store's server, or a relay server.

According to embodiments disclosed in the present disclosure, each component (e.g., module or program) of the above-described components may include a single entity or a plurality of entities, and some of the plurality of entities may be separately placed in other components. According to embodiments disclosed in the present disclosure, one or more of the above-described components or operations may be omitted, or one or more other components or operations may be added. Alternatively or additionally, a plurality of components (e.g., modules or programs) may be integrated into a single component. In this case, the integrated component may perform one or more functions of each component of the plurality of components identically or similarly to those performed by a corresponding component of the plurality of components prior to the integration. According to embodiments disclosed herein, operations performed by a module, a program, or another component may be executed sequentially, in parallel, iteratively, or heuristically, one or more of the operations may be performed in a different order or omitted, or one or more other operations may be added.

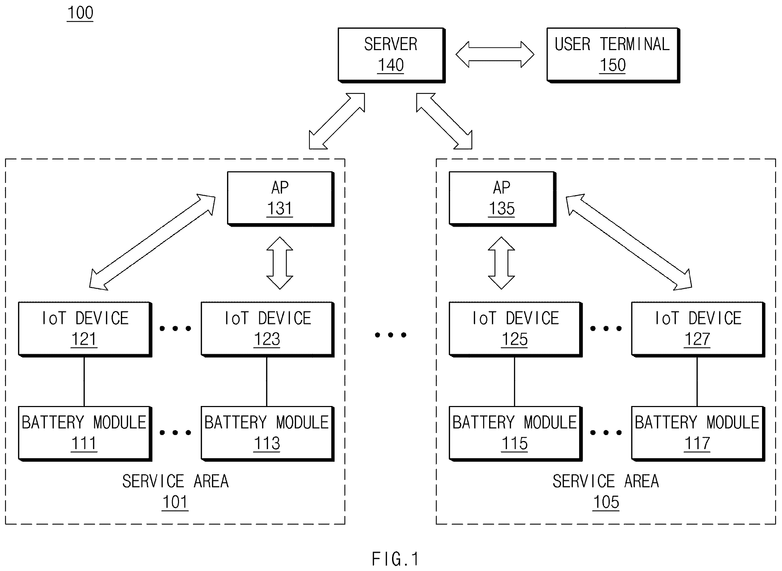

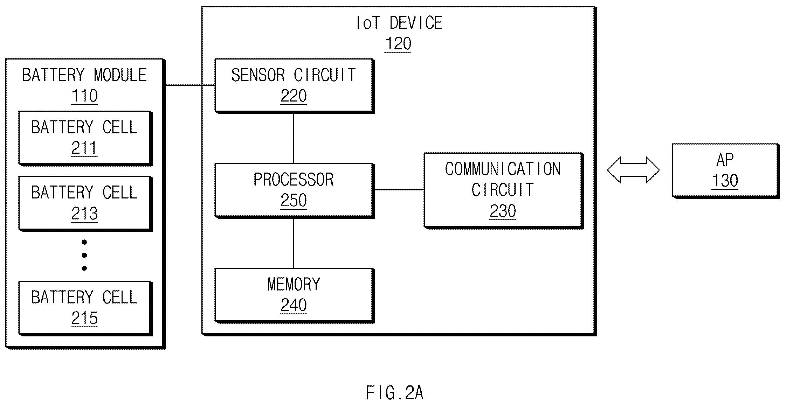

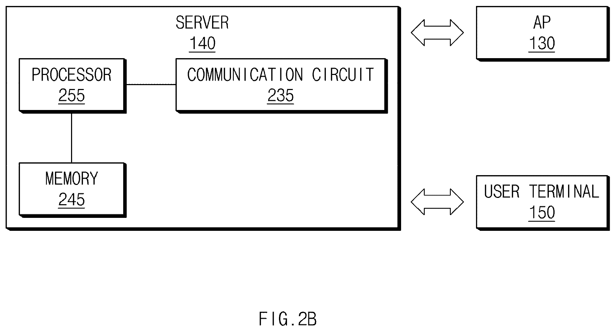

FIG. 1 is a block diagram of a network environment 100 according to an embodiment of the present disclosure. FIG. 2A is a block diagram of an internet of things (IoT) device according to an embodiment of the present disclosure. FIG. 2B is a block diagram of a server according to an embodiment of the present disclosure.

Referring to FIG. 1, the network environment 100 may include a plurality of service areas 101 and 105.

In an embodiment, each of the plurality of service areas 101 and 105 may be an area (or coverage) in which network services are provided by access points (APs) 131 and 135.

In one embodiment, each of a plurality of IoT devices 121, 123, 125, and 127 may be electrically connected to each of a plurality of battery modules 111, 113, 115, and 117.

Referring to FIG. 2A, an exemplary battery module 110 is shown. In an embodiment, each of the plurality of battery modules 111, 113, 115, and 117 may have the same structure as the exemplary battery module 110.

In an embodiment, the battery module 110 may include at least one battery cell 211, 213, or 215. The at least one battery cell 211, 213, or 215 may be included in the battery module 110 while being electrically connected to each other. For example, the at least one battery cell 211, 213, or 215 may be connected in series with each other and/or in parallel with each other. According to an embodiment, the at least one battery cell 211, 213, or 215 may be included in the battery module 110 in an electrically separated state.

Referring again to FIG. 1, in an embodiment, each of the plurality of IoT devices 121, 123, 125, and 127 may establish a wireless connection with each of the plurality of APs 131 and 135. In an embodiment, each of the plurality of IoT devices 121, 123, 125, and 127 may wirelessly transmit and receive data with each of the plurality of APs 131 and 135 on the basis of an established wireless connection.

Referring to FIG. 2A, an exemplary IoT device 120 is shown. In an embodiment, each of the plurality of IoT devices 121, 123, 125, and 127 may have the same structure as the exemplary IoT device 120.

In an embodiment, the IoT device 120 may include a sensing circuit 220, a communication circuit 230, a memory 240, and a processor 250.

In an embodiment, the sensing circuit 220 may obtain information related to the battery module 110. In an embodiment, the sensing circuit 220 may obtain values (or information) related to the state of each of the at least one battery cell 211, 213, or 215. In an embodiment, values related to a state may include one or more values for a battery cell's voltage, current, resistance, state of charge (SOC), state of health (SOH), or temperature, or a combination thereof. Hereinafter, values related to a state may be referred to as "state values".

In an embodiment, the sensing circuit 220 may provide information (e.g., state values) of each of the at least one battery cell 211, 213, or 215 to the processor 250.

In an embodiment, the communication circuit 230 may establish a wireless communication channel between the IoT device 120 and the AP 130 and transmit and receive data with the AP 130 through the established communication channel. In an embodiment, the communication circuit 230 may perform communication on the basis of at least one radio access technology (RAT). In an embodiment, the communication circuit 230 may transmit and receive data with the AP 130 by using at least one RAT. In an embodiment, the at least one radio access technology may include Wi-Fi, ultra wide band (UWB), near field communication (NFC), Bluetooth, or Bluetooth low energy (BLE).

In an embodiment, the communication circuit 230 may transmit and receive data with a server 140 through a wireless communication channel between the IoT device 120 and the AP 130 and a communication channel between the AP 130 and the server 140. In order for the communication circuit 230 to transmit and receive data with the server 140, the resources of the IoT device 120, the AP 130, and the server 140 may be allocated a communication channel. Accordingly, if the IoT device 120 occupies the wireless communication channel between the IoT device 120 and the AP 130 and the communication channel between the AP 130 and the server 140 for data communication with the server 140, delays may occur in a network.

In an embodiment, the memory 240 may include a volatile memory and/or a non-volatile memory. In an embodiment, the memory 240 may store data used by at least one component (e.g., the processor 250 or the sensing circuit 220) of the IoT device 120. For example, data may include software (or instructions related thereto), input data, or output data. In one embodiment, an instruction, if executed by the processor 250, may cause the IoT device 120 to perform operations defined by the instruction.

In an embodiment, the processor 250 may execute software to control at least one other component (e.g., hardware or software component) of the IoT device 120 connected to the processor 250, and perform a variety of data processing and calculations.

Referring again to FIG. 1, in an embodiment, each of the plurality of APs 131 and 135 may establish a wireless and/or wired connection with the server 140. In an embodiment, each of the plurality of APs 131 and 135 may transmit and receive data with the server 140 on the basis of the established connection.

In an embodiment, the server 140 may establish a wireless connection with a user terminal 150. In an embodiment, the server 140 may wirelessly transmit and receive data with the user terminal 150 on the basis of an established wireless connection.

Referring to FIG. 2B, the server 140 may include a communication circuit 235, a memory 245, and a processor 255. The functions of the communication circuit 235, the memory 245, and the processor 255 may respectively correspond to the functions of the communication circuit 230, the memory 240, and the processor 250 described with reference to FIG. 2A.

Hereinafter, a method in which the IoT device 120 transmits a state value of the battery module 110 to the server 140 according to an embodiment of the present disclosure will be described. Hereinafter, the IoT device 120 and the battery module 110 will be described as examples, but this is only an example. The following descriptions are also applicable to IoT devices 121, 123, 125, and 127 and battery modules 111, 113, 115, and 117.

In an embodiment, the IoT device 120 may periodically obtain a state value of the battery module 110 by using the sensing circuit 220. In an embodiment, the IoT device 120 may obtain a state value of the battery module 110 at a specified time interval (e.g., 1 hour) by using the sensing circuit 220. In an embodiment, the state value may include one or more values for the battery cell's voltage, current, resistance, state of charge (SOC), state of health (SOH), or temperature, or a combination thereof.

In an embodiment, the IoT device 120 may periodically establish a wireless communication connection with the AP 130. In an embodiment, the IoT device 120 may establish a wireless communication connection with the AP 130 at each transmission timing of data including a state value obtained during a designated time period (e.g., 24 hours). In an embodiment, if a wireless communication connection is established with the AP 130, the IoT device 120 may transmit data including a state value of the battery module 110 to the server 140 through the AP 130. In an embodiment, the IoT device 120 may transmit data including a state value of the battery module 110 to the server 140 and then release the wireless communication connection with the AP 130.

In an embodiment, the IoT device 120 may determine whether transmission of data including a state value was successful. In an embodiment, the IoT device 120 may determine whether transmission of data including a state value was successful on the basis of a response (e.g., ACK or NACK) to transmission of data.

In an embodiment, if transmission of data including a state value was successful, the IoT device 120 may not retransmit the data including the state value. In an embodiment, if transmission of data including a state value failed, the IoT device 120 may retransmit data including a state value.

Hereinafter, a method in which the IoT device 120 retransmits data including a state value of the battery module 110 to the server 140 according to an embodiment of the present disclosure will be described. Hereinafter, the IoT device 120 and the battery module 110 will be described as examples, but this is only an example. The following descriptions are also applicable to IoT devices 121, 123, 125, and 127 and battery modules 111, 113, 115, and 117.

In an embodiment, the IoT device 120 may identify the number of retransmissions of data including a state value. In an embodiment, the IoT device 120 may identify the number of retransmissions of data including a state value in response to failure in transmission or retransmission of data including a state value.

In an embodiment, based on the number of retransmissions of data including a state value, the IoT device 120 may identify a division number of the data. In an embodiment, the IoT device 120 may identify a division number of data including a state value in response to failure in transmission of the data including the state value. In an embodiment, the IoT device 120 may identify a division number of the data on the basis of the number of retransmissions of data including a state value in accordance with Equation 1 below.

$$[Equation\ 1]$$

$$p = \begin{cases} \left\lceil \dfrac{k \times (n+1)}{L} \right\rceil & ,\text{if } k \times (n+1) > L \\ 1 & ,\text{if } k \times (n+1) \leq L \end{cases}$$

In Equation 1, p may be a division number, k may be a time required to transmit data (e.g., 4 seconds), n may be the number of retransmissions, n+1 may be the total number of transmissions, and L may indicate an occupancy limit time (e.g., 10 seconds) for a network of the IoT device 120. In an embodiment, $k \times (n + 1)$ may be a total time required for transmission. In an embodiment, the total time required for transmission may be the product of the total number of transmissions and the time required to transmit data.

In Equation 1, the division number may be determined based on a value obtained by dividing the total time required for transmission of data by the occupancy limit time. In an embodiment, the occupancy limit time may be a time for the IoT device 120 to prevent excessive occupancy of a network (e.g., a wireless communication channel between the IoT device 120 and the AP 130 and a communication channel between the AP 130 and the server 140). For example, the division number may be determined to be the up value, down value, or rounding value of a value obtained by dividing the total time required for transmission of data by the occupancy limit time. Hereinafter, it is exemplified that the division number is determined to be the rounding value of a value obtained by dividing the total time required for transmission of data by the occupancy limit time.

For example, if a time required to transmit data is 4 seconds and the number of retransmissions is 1, a total time required for transmission may be 8. In this example, if a network occupancy limit time of the IoT device 120 is 10 seconds, a division number may be determined to be 1. For another example, if a time required to transmit data is 4 seconds, the number of retransmissions is 2, and a network occupancy limit time is 10 seconds, a division number may be determined to be 2 as a total time required for transmission is 12.

In an embodiment, the IoT device 120 may divide data including a state value into sub-data corresponding to a division number. For example, if a division number is 2, the IoT device 120 may divide data including a state value into two pieces of sub-data.

In an embodiment, the IoT device 120 may identify a transmission time interval for data including a state value on the basis of the number of retransmissions. In an embodiment, the IoT device 120 may identify a transmission time interval of data including a state value in accordance with Equation 2 below.

[Equation 2]

$$x = \frac{i}{p}$$

In Equation 2, x may be a transmission time interval, i may represent an initial transmission time interval, and p may represent a division number. Therefore, the transmission time interval may be a time interval obtained by dividing a designated time period by the number of retransmissions. For example, if an initial transmission time interval is 24 hours and a division number is 2, a transmission time interval may be determined to be 12 hours.

In an embodiment, the IoT device 120 may sequentially retransmit sub-data at a transmission time interval based on the number of retransmissions. For example, if a division number is 2 and a transmission time interval is 12 hours, the IoT device 120 may transmit second sub-data 12 hours after transmitting first sub-data among the two pieces of sub-data.

According to an embodiment, the IoT device 120 may retransmit remaining sub-data that failed to be transmitted, if at least one piece of sub-data among the sub-data has been transmitted. Hereinafter, a method in which the IoT device 120 retransmits sub-data that failed to be transmitted to the server 140 according to an embodiment of the present disclosure will be described.

In an embodiment, the IoT device 120 may determine whether transmission of sub-data was successful. In an embodiment, the IoT device 120 may determine whether transmission of each piece of sub-data was successful on the basis of a response (e.g., ACK or NACK) to transmission of each piece of sub-data.

In an embodiment, the IoT device 120 may identify at least one piece of sub-data that failed to be transmitted among sub-data. In an embodiment, the IoT device 120 may update the number of retransmissions if at least one piece of sub-data that failed to be retransmitted is identified. In an embodiment, the IoT device 120 may identify a new division number of at least one piece of sub-data on the basis of the updated number of retransmissions. In an embodiment, the IoT device 120 may identify a new division number of at least one piece of sub-data on the basis of the updated number of retransmissions. In an embodiment, the IoT device 120 may divide at least one piece of sub-data into new sub-data corresponding to a new division number. In an embodiment, the IoT device 120 may sequentially retransmit new sub-data to the server 140 through the communication circuit 230 at an updated transmission time interval based on the updated number of retransmissions.

According to an embodiment, the IoT device 120 may adjust a transmission timing of sub-data so that a transmission timing of data including a state value obtained during a next specified time period does not overlap with a transmission timing of the sub-data. Hereinafter, a method in which the IoT device 120 adjusts a transmission timing of sub-data according to an embodiment of the present disclosure will be described.

In an embodiment, the IoT device 120 may determine whether retransmission timings of sub-data overlap with a transmission timing of another piece of data of state values obtained during a time period following a designated time period.

In an embodiment, the IoT device 120 may adjust retransmission timings of sub-data if one retransmission timing of retransmission timings of the sub-data overlaps with a transmission timing of another piece of data. In an embodiment, the IoT device 120 may determine retransmission timings of sub-data so that retransmission timings of the sub-data do not overlap with a transmission timing of another piece of data of state values obtained during a time period following a designated time period. In an embodiment, the IoT device 120 may determine new retransmission timings on the basis of an offset if one retransmission timing of retransmission timings overlaps with a transmission timing of another piece of data. For example, if one retransmission timing of retransmission timings overlaps with a transmission timing of another piece of data, the IoT device 120 may move each of the retransmission timings as much as the offset. In an embodiment, the offset may be shorter than a transmission time interval between retransmission timings. For example, the offset may correspond to a value obtained by dividing a transmission time interval by an arbitrary decimal number.

In an embodiment, the IoT device 120 may determine whether re-determined new retransmission timings overlap with a transmission timing of another piece of data of state values obtained during a next time period. In an embodiment, the IoT device 120 may readjust redetermined retransmission timings if the redetermined retransmission timings overlap with a transmission timing of another piece of data of state values obtained during a next time period.

In an embodiment, the IoT device 120 may sequentially retransmit the sub-data through the communication circuit on the basis of determined new retransmission timings.

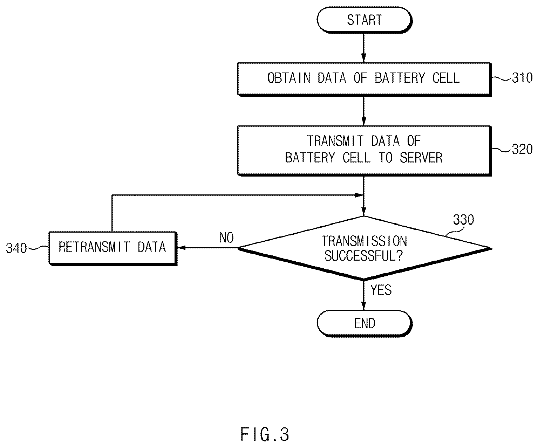

FIG. 3 is a flowchart showing an operation of the IoT device 120 according to an embodiment of the present disclosure.

Referring to FIG. 3, in operation 310, the IoT device 120 may obtain data of the battery cell 211, 213, or 215. In an embodiment, the IoT device 120 may obtain data of the battery cell 211, 213, or 215 at a designated time interval (e.g., 1 hour) and during a designated time period (e.g., 24 hours). In an embodiment, data of the battery cell 211, 213, or 215 may include values related to a state. In an embodiment, values related to a state may include one or more values for a battery cell's voltage, current, resistance, state of charge (SOC), state of health (SOH), or temperature, or a combination thereof. Hereinafter, values related to a state may be referred to as "state values".

In operation 320, the IoT device 120 may transmit data of the battery cell 211, 213, or 215 to the server 140. In an embodiment, the IoT device 120 may establish a wireless communication channel with the AP 130 through the communication circuit 230. In an embodiment, the IoT device 120 data of the battery cell 211, 213, or 215 to the server 140 through a wireless communication channel with the AP 130 and a communication channel between the AP 130 and the server 140.

In operation 330, the IoT device 120 may determine whether transmission was successful. In an embodiment, the IoT device 120 may determine whether transmission of data was successful on the basis of a response (e.g., ACK or NACK) from the AP 130 and/or the server 140.

In an embodiment, if transmission of data was successful, the IoT device 120 may terminate operations according to FIG. 3. In an embodiment, if transmission of data was successful, the IoT device 120 may re-perform operations according to FIG. 3 to transmit data of the battery cell 211, 213, or 215 obtained during a next time period.

In an embodiment, if transmission of data failed, the IoT device 120 may perform operation 340.

In operation 340, the IoT device 120 may retransmit data.

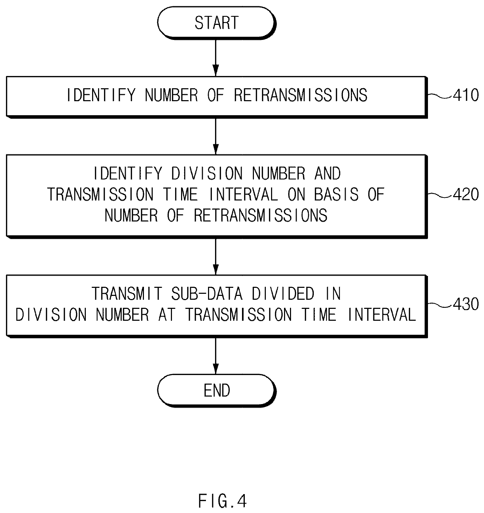

FIG. 4 is a flowchart showing an operation of the IoT device 120 according to an embodiment of the present disclosure. Operations of FIG. 4 may be included in operation 340 of FIG. 3.

Referring to FIG. 4, in operation 410, the IoT device 120 may identify the number of retransmissions. In an embodiment, the IoT device 120 may identify the number of retransmissions of data including a state value in response to failure in transmission or retransmission of data including a state value.

In operation 420, the IoT device 120 may identify a division number and a transmission time interval of data of the battery cell 211, 213, or 215 on the basis of the number of retransmissions. In an embodiment, the IoT device 120 may identify a division number of data on the basis of the number of retransmissions of data including a state value in accordance with Equation 1 above. In one embodiment, the IoT device 120 may identify a transmission time interval of data including a state value in accordance with Equation 2 above.

In operation 430, the IoT device 120 may transmit sub-data divided in a division number at a transmission time interval.

Thereafter, if at least one piece of sub-data among sub-data is transmitted, the IoT device 120 may retransmit remaining sub-data that failed to be transmitted. According to an embodiment, the IoT device 120 may adjust a transmission timing of sub-data so that a transmission timing of data including a state value obtained during a next specified time period does not overlap with a transmission timing of the sub-data.

**Claims**

1. An internet of things (IoT) device, comprising:

   a sensing circuit that obtains state values of a battery cell every time intervals;
   a communication circuit that establishes a wireless communication connection with a server at a transmission timing of data including the state values obtained during a designated time period; and
   a processor, wherein the processor is configured to:

   transmit the data of the state values obtained during the designated time period to the server through the communication circuit;
   in response to failure in transmission of the data, divide the data into sub-data of a division number based on the number of retransmissions of the data; and
   sequentially retransmit the sub-data through the communication circuit at a transmission time interval based on the number of retransmissions,
   wherein the transmission time interval is a time interval obtained by dividing the designated time period by the number of retransmissions.

2. The IoT device of claim 1, wherein the division number is determined based on a value obtained by dividing a total time required to transmit the data by an occupancy limit time for the network of the IoT device,

   the total time required for transmission is the product of the total number of transmissions of the data and a time required to transmit the data, and
   the total number of transmissions is a value obtained by adding 1 to the number of retransmissions.

3. The IoT device of claim 2, wherein if the total time required for transmission is less than or equal to the occupancy limit time, the division number is 1, and
if the total time required for transmission exceeds the occupancy limit time, the division number is determined based on the divided value.

4. The IoT device of claim 3, wherein the division number is determined by one of the up value, down value, or rounding value of the divided value.

5. The IoT device of claim 1, wherein the processor is configured to:

   identify at least one piece of sub-data that failed to be retransmitted among the sub-data;
   if the at least one piece of sub-data that failed to be retransmitted is identified, identify a new division number of the at least one piece of sub-data on the basis of an updated number of retransmissions;
   divide the at least one piece of sub-data into new sub-data corresponding to the new division number; and
   sequentially retransmit the new sub-data through the communication circuit at an updated transmission time interval based on the updated number of retransmissions.

6. The IoT device of claim 1, wherein the processor is configured to:

   determine whether retransmission timings of the sub-data overlap with a transmission timing of another piece of data of state values obtained during a time period following the designated time period;
   if one retransmission timing of the retransmission timings overlaps with the transmission timing of the other data, determine new retransmission timings on the basis of an offset; and
   based on the new retransmission timings, retransmit the sub-data sequentially through the communication circuit.

7. A method of operating an internet of things (IoT) device, comprising:

   obtaining state values of a battery cell every time intervals;
   transmitting data of the state values obtained during a designated time period to a server through a communication circuit of the IoT device;
   in response to failure in transmission of the data, dividing the data into sub-data of a division number based on the number of retransmissions of the data; and
   sequentially retransmitting the sub-data through the communication circuit at a transmission time interval based on the number of retransmissions,
   wherein the transmission time interval is a time interval obtained by dividing the designated time period by the number of retransmissions.

8. The method of claim 7, wherein the division number is determined based on a value obtained by dividing a total time required to transmit the data by an occupancy limit time for the network of the IoT device,

   the total time required for transmission is the product of the total number of transmissions of the data and a time required to transmit the data, and
   the total number of transmissions is a value obtained by adding 1 to the number of retransmissions.

9. The method of claim 8, wherein if the total time required for transmission is less than or equal to the occupancy limit time, the division number is 1, and
if the total time required for transmission exceeds the occupancy limit time, the division number is determined based on the divided value.

10. The method of claim 9, wherein the division number is determined by one of the up value, down value, or rounding value of the divided value.

11. The method of claim 7, comprising:

   if at least one piece of sub-data among the sub-data has been transmitted, identifying remaining sub-data that failed to be transmitted among the sub-data;
   identifying a new division number of the remaining sub-data on the basis of the updated number of retransmissions;
dividing the remaining sub-data into new sub-data corresponding to the new division number; and
sequentially retransmitting the new sub-data through the communication circuit at an updated transmission time interval based on the updated number of retransmissions.

12. The method of claim 7, wherein the retransmitting comprises:

determining the retransmission timings of the sub-data so that the retransmission timings do not overlap with a transmission timing of another piece of data of state values obtained during a time period following the designated time period; and
based on the determined retransmission timings, sequentially retransmitting the sub-data through the communication circuit.

FIG.1

100

USER TERMINAL 150

SERVER 140

AP 135

IoT DEVICE 127 — BATTERY MODULE 117

IoT DEVICE 125 — BATTERY MODULE 115

SERVICE AREA 105

AP 131

IoT DEVICE 123 — BATTERY MODULE 113

IoT DEVICE 121 — BATTERY MODULE 111

SERVICE AREA 101

IoT DEVICE
120

BATTERY MODULE
110

BATTERY CELL
211

BATTERY CELL
213

· · ·

BATTERY CELL
215

SENSOR CIRCUIT
220

PROCESSOR
250

MEMORY
240

COMMUNICATION
CIRCUIT
230

AP
130

FIG.2A

FIG.2B

EP 4 572 199 A1

```
                              ┌─────────────┐
                              │    START    │
                              └──────┬──────┘
                                     │
                                     ▼
                   ┌─────────────────────────────────────┐
                   │    OBTAIN DATA OF BATTERY CELL       │────310
                   └─────────────────┬───────────────────┘
                                     │
                                     ▼
                   ┌─────────────────────────────────────┐
                   │         TRANSMIT DATA OF             │────320
                   │      BATTERY CELL TO SERVER          │
                   └─────────────────┬───────────────────┘
                                     │
        ┌────────────────────────────┼────────────┐
        │                            ▼             330
  ┌──────────────┐      NO    ╱─────────────────╲
340─│RETRANSMIT DATA│◄────────╱    TRANSMISSION    ╲
  └──────────────┘           ╲   SUCCESSFUL?      ╱
                              ╲─────────────────╱
                                     │
                                    YES
                                     ▼
                              ┌─────────────┐
                              │     END     │
                              └─────────────┘
```

FIG.3

START

IDENTIFY NUMBER OF RETRANSMISSIONS ~410

IDENTIFY DIVISION NUMBER AND
TRANSMISSION TIME INTERVAL ON BASIS OF
NUMBER OF RETRANSMISSIONS ~420

TRANSMIT SUB-DATA DIVIDED IN
DIVISION NUMBER AT TRANSMISSION TIME INTERVAL ~430

END

FIG.4

## INTERNATIONAL SEARCH REPORT

| | International application No. |
|---|---|
| | **PCT/KR2023/013104** |

### A. CLASSIFICATION OF SUBJECT MATTER

**H04L 1/18**(2006.01)i; **H04L 67/12**(2022.01)i; **H04W 4/70**(2018.01)i; **G16Y 10/75**(2020.01)i; **G16Y 20/20**(2020.01)i

According to International Patent Classification (IPC) or to both national classification and IPC

### B. FIELDS SEARCHED

Minimum documentation searched (classification system followed by classification symbols)

H04L 1/18(2006.01); G06F 13/00(2006.01); H04L 29/08(2006.01); H04M 11/00(2006.01); H04W 72/04(2009.01); H04W 88/18(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: IoT(internet of things), 배터리(battery), 상태(state), 실패(failure), 재전송(retransmission), 분할(split), 서브 데이터(subdata)

### C. DOCUMENTS CONSIDERED TO BE RELEVANT

| Category* | Citation of document, with indication, where appropriate, of the relevant passages | Relevant to claim No. |
|---|---|---|
| Y | KR 10-2018-0134136 A (SAMSUNG ELECTRONICS CO., LTD.) 18 December 2018 (2018-12-18)<br>See paragraph [0076]. | 1-12 |
| Y | JP 2973936 B2 (NEC CORP.) 08 November 1999 (1999-11-08)<br>See paragraphs [0008]-[0011]; and figure 1. | 1-12 |
| Y | JP 10-178494 A (FUJI XEROX CO., LTD.) 30 June 1998 (1998-06-30)<br>See paragraphs [0078] and [0086]; and figures 4-5. | 2-4,8-10 |
| Y | KR 10-2016-0134801 A (QUALCOMM INCORPORATED) 23 November 2016 (2016-11-23)<br>See paragraph [0062]. | 6,12 |
| A | JP 2022-032608 A (NEC CORP.) 25 February 2022 (2022-02-25)<br>See paragraphs [0097]-[0233]; and figures 3-6. | 1-12 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 December 2023** | **13 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013104**

| Patent document cited in search report | | | Publication date (day/month/year) | Patent family member(s) | | | Publication date (day/month/year) |
|---|---|---|---|---|---|---|---|
| KR | 10-2018-0134136 | A | 18 December 2018 | EP | 3637868 | A1 | 15 April 2020 |
| | | | | EP | 3637868 | B1 | 27 April 2022 |
| | | | | US | 11412453 | B2 | 09 August 2022 |
| | | | | US | 2021-0084594 | A1 | 18 March 2021 |
| | | | | WO | 2018-225990 | A1 | 13 December 2018 |
| JP | 2973936 | B2 | 08 November 1999 | JP | 10-070754 | A | 10 March 1998 |
| JP | 10-178494 | A | 30 June 1998 | None | | | |
| KR | 10-2016-0134801 | A | 23 November 2016 | BR | 112016023407 | A2 | 19 June 2018 |
| | | | | CN | 106105079 | A | 09 November 2016 |
| | | | | CN | 106105079 | B | 02 August 2019 |
| | | | | EP | 3120480 | A1 | 25 January 2017 |
| | | | | EP | 3120480 | B1 | 19 October 2022 |
| | | | | JP | 2017-515338 | A | 08 June 2017 |
| | | | | JP | 6529981 | B2 | 12 June 2019 |
| | | | | KR | 10-1891908 | B1 | 24 August 2018 |
| | | | | US | 2015-0271798 | A1 | 24 September 2015 |
| | | | | US | 9826523 | B2 | 21 November 2017 |
| | | | | WO | 2015-143236 | A1 | 24 September 2015 |
| JP | 2022-032608 | A | 25 February 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220111718